# FASCICULE DE BREVET EUROPEEN

(11) **EP 1 414 123 B1**
(45) Date de publication et mention de la délivrance du brevet: **28.12.2016**
(21) Numéro de dépôt: 03354074.1
(22) Date de dépôt: 23.09.2003
(51) Int. Cl.: H02B 1/052, H02B 1/06

(54) **Chassis pour appareillage electrique**
Rahmengestell für elektrische Geräte
Frame for electrical devices

(30) Priorité: 22.10.2002 FR 0213130
(43) Date de publication de la demande: 28.04.2004
(73) Titulaire: Schneider Electric Industries SAS, 92500 Rueil-Malmaison (FR)
(72) Inventeur: Badin, Didier, Schneider Electric Industries SAS, 38050 Grenoble cedex 09 (FR); Pereira, Josiane, Schneider Electric Indust. SAS, 38050 Grenoble cedex 09 (FR); Pichon, Serge, Schneider Electric Industrielle SAS, 38050 Grenoble cedex 09 (FR)
(74) Mandataire: Tripodi, Paul

(56) Documents cités:
- EP-A- 0 237 410
- EP-A- 0 760 546
- EP-A1- 1 172 909
- WO-A-02/09248
- CH-A- 285 914

## Description

La présente invention concerne un châssis d'appareillage électrique comprenant au moins un montant sur lequel peuvent être fixés au moins deux rails de montage s'étendant sensiblement parallèlement l'un par rapport à l'autre, lesdits rails étant destinés chacun à recevoir un ou plusieurs appareils modulaires alignés sur ledit rail.

Dans les coffrets électriques modulaires connus, la distance entre deux rails DIN est soit de 125 mm, soit de 150 mm, et est donc fixe pour chacun des coffrets. Ainsi, l'installateur ne bénéficie d'aucune souplesse pour faciliter la pose ou le raccordement des produits.

On connaît le document EP 1 172 909 décrivant un châssis comportant au moins un montant sur lequel peuvent être fixés au moins deux rails de montage, lesdits rails pouvant être fixés suivant au moins deux positions différentes.

La présente invention résout ce problème et propose un châssis pour un appareillage électrique dans lequel l'installateur peut régler la distance entre les rails en fonction du type d'appareils et du type de raccordement, un plastron pour au moins un appareil modulaire, ainsi qu'un appareil modulaire destiné à être monté sur ledit châssis.

A cet effet, la présente invention a pour objet un châssis pour un appareillage selon la revendication 1.

L'invention a aussi pour objet un plastron pour au moins un appareil électrique modulaire, ledit plastron comportant une ouverture de passage d'une partie de la face avant d'au moins un appareil, formant nez, ce plastron étant caractérisé en ce que l'ouverture précitée est décentrée suivant une direction parallèle à la hauteur du plastron, ledit plastron pouvant être fixé sur l'(les) appareil(s) suivant deux positions inversées de 180°.

Ce plastron est destiné à équiper au moins un appareil monté sur un châssis, ledit châssis comportant les caractéristiques précédemment mentionnées prises seules ou en combinaison, ledit plastron pouvant être fixé sur l'(les) appareil(s) suivant les deux positions précitées en fonction de la position choisie du rail sur le(les)montant(s).

L'invention a aussi pour objet un appareil électrique modulaire destiné à être monté sur un châssis, ledit châssis comportant les caractéristiques précédemment mentionnées prises seules ou en combinaison.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue de côté schématique, illustrant deux appareils montés sur un châssis selon l'invention, dans une première configuration de fixation des appareils,
- La figure 2 est une vue similaire à la précédente, illustrant une seconde configuration de fixation des appareils,
- La figure 3 est une vue similaire aux précédentes, illustrant une troisième configuration de fixation des appareils,
- La figure 4 est une vue en plan du châssis selon l'invention, et
- La figure 5 est une vue illustrant, de manière schématique, les faces avant respectivement de deux plastrons équipant respectivement deux rangées d'appareils montés sur un châssis selon l'invention, dans une position de fixation des appareils illustrée sur les figures 2, et 5a.

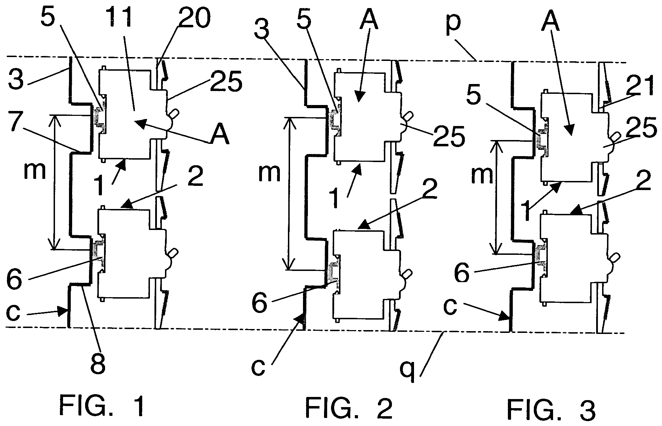

Sur les figures 1 à 3 et 5a on voit un châssis C pour un appareillage électrique sur lequel sont montées deux rangées d'appareils électriques 1,2, lesquels sont des disjoncteurs. Ces deux rangées d'appareils électriques 1,2 s'étendent parallèlement l'une par rapport à l'autre dans un même plan.

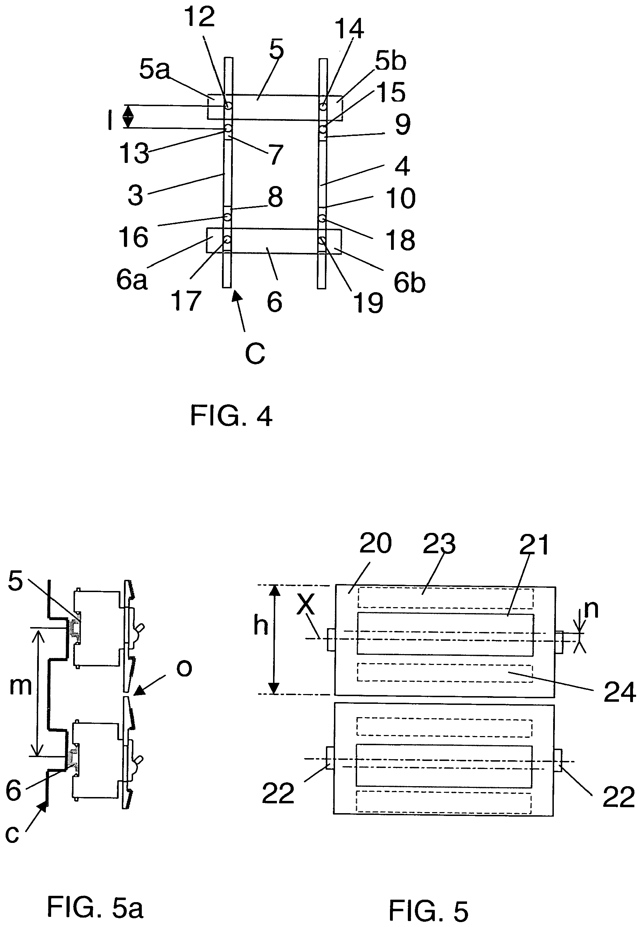

Comme illustré sur la figure 4, ce châssis C comprend deux montants 3,4 s'étendant parallèlement l'un par rapport à l'autre, et deux rails de montage 5,6 des appareils s'étendant également parallèlement l'un par rapport à l'autre et perpendiculairement audits montants 3,4. Chaque rail 5,6 est fixé par ses deux extrémités opposés 5a,5b et 6a,6b respectivement sur les deux montants 3,4. Comme on le voit sur les figures 1 à 3 et 4, les deux montants 3,4 présentent chacun, au niveau de la fixation des rails de montage 5,6, deux parties en saillie 7,8 et 9,10, lesdites parties 7,8 et 9,10 présentant, dans un plan parallèle au plan contenant les faces latérales 11 des appareils A, une section sensiblement en forme de U.

Comme on le voit sur la figure 4, et conformément à l'invention, chacun des deux montants 3,4 présente, au niveau de chaque rail de montage 5,6, et sur les parties en saillie 7,8,9,10, deux orifices de fixation 12,13,14,15,16,17,18,19, lesdits orifices étant distants de 25mm, d'où il résulte que les rails 5,6 peuvent être solidarisés aux montants 3,4 suivant deux positions différentes décalées suivant la direction longitudinale des montants 3,4. Ainsi, on voit sur la figure 1, que les deux rails 5,6 supportant respectivement les deux rangées d'appareils 1,2 respectivement situées à la partie supérieure et à la partie inférieure des montants 3, sont montés en position haute. Sur la figure 2, on voit que le rail 5 situé à la partie supérieure des montants 3 est monté en position haute, tandis que le rail 6 situé à la partie inférieure des montants 3 est monté en position basse, tel qu'illustré également sur les figures 4 et 5a. Sur la figure 3, le rail 5 situé à la partie supérieure des montants 3 est monté en position basse, tandis que le rail 6 situé à la partie inférieure des montants 3 est monté en position haute.

Dans les réalisations illustrées sur les figures, les deux positions de fixation possibles pour chaque rail 5,6 sont séparées de 25 mm, c'est à dire que la distance 1 entre deux orifices 12,13;14,15;16,17et 18,19 situés au voisinage l'un de l'autre d'un même côté de chaque montant, est de 25 mm. La distance m séparant les deux rails 5,6, est de 150 mm dans le cas où les rails 5,6 sont montés selon la disposition illustrée sur la figure 1, de 175 mm dans le cas où les rails 5,6 sont montés selon la disposition illustrée sur la figure 2, et de 125 mm dans le cas où les rails 5,6 sont montés selon la disposition illustrée sur la figure 3. En se reportant aux figures 1 à 3 et 5,5a, on voit que chaque rangée d'appareils A est muni d'un plastron 20 comportant une ouverture 21 destinée au passage d'une partie 25 des appareils A formant nez située sur la face avant des appareils. Ce plastron 20 est fixé sur la face avant des appareils par l'intermédiaire de moyens de fixation 22 centrés sur la hauteur des appareils A. Selon une caractéristique particulière de l'invention, cette ouverture 21 est décentrée suivant la hauteur du plastron 20 d'une distance n (fig.5) correspondant à la moitié de la distance 1 séparant les deux positions de fixation précitées. Dans la réalisation illustrée sur les figures, ce décalage n est de 12,5mm. Grâce à ces caractéristiques, chaque plastron 20 peut être solidarisé aux appareils A correspondants suivant deux positions inversées de 180° en fonction de la position de fixation haute ou basse du rail 5,6 sur les montants 3 4. Ainsi, en position haute du rail 5, tel que ceci est le cas sur les figures 1,2 et 5a, pour le rail 5 situé à la partie supérieure des montants 3 et sur la figure 1 pour le rail 6 situé à la partie inférieure des montants 3, le plastron 20 est orienté sur les appareils de telle manière que son ouverture 21 soit décalée vers le haut par rapport à l'axe du plastron 20. Dans le cas contraire où le rail 6 est fixé en position basse, tel que ceci est le cas pour le rail 6 situé à la partie inférieure des montants 3 sur la figure 2, pour le rail 5 situé à la partie supérieure des montants 3 sur la figure 3, et pour le rail 6 situé à la partie inférieure des montants 3 sur la figure 5a, les plastrons 20 sont orientés de telle manière que leur ouverture 21 soit décalée vers le bas.

On voit également que chaque plastron 20 présente une hauteur h, correspondant à la valeur médiane de la distance entre les deux positions précitées. Dans la réalisation illustrée sur les figures, cette valeur médiane est de 150mm. Ainsi, quelque soit la position de fixation choisie pour les deux rails 5,6, les plastrons 20 se situent au même niveau p,q par rapport aux montants 3,4, et les deux plastrons 20 de deux rangées d'appareils A situées l'une en dessous de l'autre se rejoignent en un même endroit o.

Comme ceci est également visible sur les figures 1,2,3,5 et 5a, les plastrons 20 des appareils A sont également munis de moyens de repérage 23,24 et de deux empreintes d'encliquetage d'un protège-étiquette, lesdites empreintes étant situées de part et d'autre de l'ouverture modulaire 21 du plastron 20. Cette disposition permet d'installer le repérage des circuits au-dessus ou au-dessous des appareils quel que soit le montage effectué et la distance entre les rails réalisée. Cette caractéristique laisse donc libre choix à l'installateur pour positionner le repérage, et ainsi aucune contrainte dépendante de la distance choisie entre les rails n'est imposée à l'installateur.

On notera que les rails DIN 5,6, après avoir été amenés en regard des orifices correspondant à l'une ou l'autre position de fixation, sont solidarisés aux montants, par l'intermédiaire par exemple de vis auto-taraudeuses livrées avec le coffret.

Ainsi, en modifiant la position de un ou plusieurs rails, on obtient une cote entre les rails de 125,150 ou 175 mm. Dans chaque cas de montage, le caractère monobloc du sous-ensemble comprenant le châssis est conservé.

On a donc réalisé grâce à l'invention, un châssis pour un appareillage électrique, de conception simple, offrant à l'installateur la possibilité avec un même coffret, en fonction de son besoin ou de l'environnement dans lequel le coffret est installé (c'est à dire le type d'appareils et le type de raccordement (câbles, peignes, répartiteur etc.)), de faire varier la distance entre les rails ou les rangées d'appareillage modulaires.

Bien entendu, l'invention n'est pas limitée aux modes de réalisations décrits et illustrés qui n'ont été donnés qu'à titre d'exemple.

## Revendications

1. Châssis pour un appareillage électrique comprenant au moins un montant (3,4) sur lequel peuvent être fixés au moins deux rails de montage (5,6) s'étendant sensiblement parallèlement l'un par rapport à l'autre, lesdits rails (5,6) étant destinés chacun à recevoir un ou plusieurs appareils modulaires alignés sur ledit rail, **caractérisé en ce que** chaque rail de montage (5,6) peut être fixé sur le(les) montant(s) (3,4) suivant deux positions différentes, de telle manière que la distance entre les deux rails (5,6) puisse prendre trois valeurs différentes en fonction du choix de la position de chacun des deux rails (5,6) sur le(les) montant(s) (3,4), et **en ce que** le ou chaque montant (3,4) comporte, au niveau de chaque rail (5,6), deux moyens de fixation (12 à 19) du rail (5,6), lesdits moyens étant décalés d'une distance de 25 mm.

2. Châssis pour un appareillage électrique selon la revendication 1, **caractérisé en ce que** le ou chaque montant (3,4) s'étend suivant une direction sensiblement perpendiculaire aux rails (5,6).

3. Châssis pour un appareillage électrique selon la revendication 1 ou 2, **caractérisé en ce qu'**il comporte deux montants (3,4) sensiblement parallèles l'un par rapport à l'autre.

4. Châssis pour un appareillage électrique selon l'une quelconque des revendications 1 à 3, **caractérisé en ce que** les deux positions différentes précitées sont décalées suivant la direction longitudinale du (des) montant(s) (3,4).

5. Châssis pour un appareillage électrique selon l'une quelconque des revendications précédentes, **caractérisé en ce que** les trois valeurs précitées de distance (m) possible entre les rails (5,6) sont respectivement 125,150 et 175 mm.

6. Plastron pour au moins un appareil électrique modulaire, ledit appareil étant destiné à être fixé sur un châssis C selon l'une quelconque des revendications précédentes, ledit plastron (20) comportant une ouverture (21) de passage d'une partie (25) de la face avant d'au moins un appareil A formant nez, **caractérisé en ce que** l'ouverture précitée (21) est décentrée suivant une direction parallèle à la hauteur (h) du plastron (20), ledit plastron (20) pouvant être fixé sur l'(les) appareil(s) A suivant deux positions inversées de 180° en fonction de la position choisie du rail (5,6) sur le (les) montant(s) (3,4).

7. Plastron selon la revendication 6, **caractérisé en ce que** la valeur du décentrage précité (n) de l'ouverture précitée (21) correspond à la moitié de la distance (1) entre les deux positions de fixation des rails (5,6) sur le(s) montant(s) (3,4).

8. Plastron selon la revendication 6 ou 7, **caractérisé en ce que** la hauteur (h) du plastron (20) correspond sensiblement à la valeur médiane de la distance (m) entre les rails (5,6).

9. Plastron selon la revendication 6 à 8, **caractérisé en ce qu'**il comporte des moyens de fixation (22) du plastron (20) sur l'(les) appareil (s) A, lesdits moyens étant centrés par rapport à la hauteur (h) dudit plastron (20).

10. Plastron selon l'une quelconque des revendications 6 à 9, **caractérisé en ce qu'**il comporte des moyens de repérage (23,24) des circuits situés de part et d'autre de l'ouverture précitée (21) du plastron (2 0).

11. Plastron selon l'une quelconque des revendications 6 à 10, **caractérisé en ce qu'**il comporte deux empreintes d'encliquetage d'un protège-étiquette situées respectivement de part et d'autre de l'ouverture (21) du plastron (20).

12. Plastron pour au moins un appareil électrique modulaire, ledit plastron compostant une ouverture (21) de passage d'une partie (25) de la face avant d'au moins un appareil, **caractérisé en ce que** l'ouverture précitée (21) est décentrée suivant une direction parallèle à la hauteur (h) du plastron (20), ledit plastron (20) pouvant être fixé sur l'appareil (A) suivant deux positions inversées de 180°.

13. Appareil modulaire électrique destiné à être monté sur un châssis C selon l'une quelconque des revendications 1 à 5 et comportant un plastron (20) selon l'une quelconque des revendications 6 à 12.

## Patentansprüche

1. Rahmengestell für eine elektrische Einrichtung, aufweisend mindestens eine Strebe (3, 4) an welcher mindestens zwei Montageschienen (5, 6) befestigt werden können, welche sich im Wesentlichen parallel zueinander erstrecken, wobei die Schienen (5, 6) dafür vorgesehen sind, jeweils ein oder mehrere modulare Geräte aufzunehmen, welche auf der Schiene ausgerichtet sind, **dadurch gekennzeichnet, dass** jede Montageschiene (5, 6) an der (den) Strebe(n) (3, 4) gemäß zwei verschiedener Positionen in der Weise befestigt werden kann, dass der Abstand der beiden Schienen (5, 6) drei verschiedene Werte in Abhängigkeit der Wahl der Position jeder der beiden Schienen (5, 6) an der (den) Strebe(n) (3, 4) annehmen kann, und dass die oder jede Strebe (3, 4) im Bereich jeder Schiene (5, 6) zwei Mittel (12 bis 19) zur Befestigung der Schiene (5, 6) aufweist, wobei die Mittel um einen Abstand von 25 mm versetzt sind.

2. Rahmengestell für eine elektrische Einrichtung nach Anspruch 1, **dadurch gekennzeichnet, dass** sich die oder jede Strebe (3, 4) gemäß einer im Wesentlichen senkrechten Richtung zu den Schienen (5, 6) erstreckt.

3. Rahmengestell für eine elektrische Einrichtung nach Anspruch 1 oder 2, **dadurch gekennzeichnet, dass** sie zwei im Wesentlichen zueinander parallele Streben (3, 4) aufweist.

4. Rahmengestell für eine elektrische Einrichtung nach einem der Ansprüche 1 bis 3, **dadurch gekennzeichnet, dass** die vorgenannten beiden verschiedenen Positionen gemäß der longitudinalen Richtung der Strebe(n) (3, 4) versetzt sind.

5. Rahmengestell für eine elektrische Einrichtung nach einem der vorhergehenden Ansprüche, **dadurch gekennzeichnet, dass** die vorgenannten drei Werte möglichen Abstands (m) zwischen den Schienen (5, 6) jeweils 125, 150 und 175 mm sind.

6. Frontplatte für mindestens ein modulares elektrisches Gerät, wobei das Gerät dafür vorgesehen ist, an einem Rahmengestell C nach einem der vorhergehenden Ansprüche befestigt zu werden, wobei die Frontplatte (20) eine Öffnung (21) zum Durchlass eines Nase bildenden Abschnitts (25) der vorderen Fläche von mindestens einem Gerät A aufweist, **dadurch gekennzeichnet, dass** die vorgenannte Öffnung (21) gemäß einer Richtung parallel zur Höhe (h) der Frontplatte (20) dezentriert ist, wobei die Frontplatte (20) an dem (den) Gerät(en) A gemäß zweier um 180° gedrehter Positionen in Abhängigkeit von der gewählten Position der Schiene (5, 6) an der (den) Strebe(n) (3, 4) befestigt werden kann.

7. Frontplatte nach Anspruch 6, **dadurch gekennzeichnet, dass** der Wert der vorgenannten Dezentrierung (n) der vorgenannten Öffnung (21) der Hälfte des Abstandes (I) zwischen den beiden Befestigungspositionen der Schienen (5, 6) an der (den) Strebe(n) (3, 4) entspricht.

8. Frontplatte nach Anspruch 6 oder 7, **dadurch gekennzeichnet, dass** die Höhe (h) der Frontplatte (20) im Wesentlichen dem mittleren Wert des Abstands (m) zwischen den Schienen (5, 6) entspricht.

9. Frontplatte nach Anspruch 6 bis 8, **dadurch gekennzeichnet, dass** sie Mittel zur Befestigung (22) der Frontplatte (20) an dem (den) Gerät(en) A aufweist, wobei die Mittel in Bezug auf die Höhe (h) der Frontplatte (20) zentriert sind.

10. Frontplatte nach einem der Ansprüche 6 bis 9, **dadurch gekennzeichnet, dass** sie Mittel zur Markierung (23, 24) von Schaltungen aufweist, welche beiderseits der vorgenannten Öffnung (21) der Frontplatte (20) angeordnet sind.

11. Frontplatte nach einem der Ansprüche 6 bis 10, **dadurch gekennzeichnet, dass** sie zwei Rastvertiefungen eines Etikettenschutzes aufweist, welche jeweils beiderseits der Öffnung (21) der Frontplatte (20) angeordnet sind.

12. Frontplatte für mindestens ein modulares elektrisches Gerät, wobei die Frontplatte eine Öffnung (21) zum Durchlass eines Abschnitts (25) der vorderen Fläche von mindestens einem Gerät aufweist, **dadurch gekennzeichnet, dass** die vorgenannte Öffnung (21) gemäß einer Richtung parallel zur Höhe (h) der Frontplatte (20) dezentriert ist, wobei die Frontplatte (20) an dem Gerät (A) gemäß zweier um 180° gedrehter Positionen befestigt werden kann.

13. Modulares elektrisches Gerät, welches dafür vorgesehen ist, an einem Rahmengestell nach einem der Ansprüche 1 bis 5 montiert zu werden und eine Frontplatte (20) nach einem der Ansprüche 6 bis 12 aufweist.

## Claims

1. Frame for an electrical device comprising at least one upright (3, 4) to which there can be fixed at least two mounting rails (5, 6) running substantially parallel to one another, the said rails (5, 6) each being intended to accept one or more modular devices which are aligned along the said rail, **characterized in that** each mounting rail (5, 6) can be fixed to the upright(s) (3, 4) in two different positions such that the distance between the two rails (5, 6) can adopt three different values according to the choice of position of each of the two rails (5, 6) on the upright(s) (3, 4), and **in that** the or each upright (3, 4) comprises, at the level of each rail (5, 6), two means of attachment (12 to 19) of the rail (5, 6), the said means being offset by a distance of 25 mm.

2. Frame for an electrical device according to Claim 1, **characterized in that** the or each upright (3, 4) extends in a direction substantially perpendicular to the rails (5, 6).

3. Frame for an electrical device according to Claim 1 or 2, **characterized in that** it comprises two uprights (3, 4) substantially parallel to one another.

4. Frame for an electrical device according to any one of Claims 1 to 3, **characterized in that** the two aforementioned different positions are offset in the longitudinal direction of the upright(s) (3, 4).

5. Frame for an electrical device according to any one of the preceding claims, **characterized in that** the aforementioned three values for the possible distance (m) between the rails (5, 6) are 125, 150 and 175 mm respectively.

6. Faceplate for at least one modular electrical device, the said device being intended to be fixed to a frame C according to any one of the preceding claims, the said faceplate (20) comprising an opening (21) for the passage of part (25) of the front face of at least one device A forming a snout, **characterized in that** the aforementioned opening (21) is off-centred in a direction parallel to the height (h) of the faceplate (20), the said faceplate (20) being able to be fixed to the device(s) A in two positions which are inverted by 180° according to the chosen position for the rail (5, 6) on the upright(s) (3, 4).

7. Faceplate according to Claim 6, **characterized in that** the value of the aforementioned offset (n) of the aforementioned opening (21) corresponds to half the distance (I) between the two positions of attachment of the rails (5, 6) to the upright(s) (3, 4).

8. Faceplate according to Claim 6 or 7, **characterized in that** the height (h) of the faceplate (20) corresponds more or less to the median value of the distance (m) between the rails (5, 6).

9. Faceplate according to Claim 6 to 8, **characterized in that** it comprises means of attachment (22) of the faceplate (20) to the device(s) A, the said means being centred with respect to the height (h) of the said faceplate (20).

10. Faceplate according to any one of Claims 6 to 9, **characterized in that** it comprises means (23, 24) of identifying circuits situated on each side of the aforementioned opening (21) of the faceplate (20).

11. Faceplate according to any one of Claims 6 to 10, **characterized in that** it comprises two cavities into which to clip-fasten a label protector, these being situated respectively on each side of the opening (21) in the faceplate (20).

12. Faceplate for at least one modular electrical device, the said faceplate comprising an opening (21) for the passage of part (25) of the front face of at least one device, **characterized in that** the aforementioned opening (21) is off-centred in a direction parallel to the height (h) of the faceplate (20), the said faceplate (20) being able to be fixed to the device (A) in two positions which are inverted by 180°.

13. Modular electrical device intended to be mounted on a frame C according to any one of Claims 1 to 5 and comprising a faceplate (20) according to any one of Claims 6 to 12.
